# EUROPEAN PATENT APPLICATION

(11) **EP 4 444 033 A1**
(43) Date of publication of application: **09.10.2024**
(21) Application number: 24168193.1
(22) Date of filing: 03.04.2024
(51) Int. Cl.: H04W 88/06, H04W 74/00, H04W 72/12, H04W 84/12, H04W 76/15

(54) **UNSOLICITED UNAVAILABILITY ANNOUNCEMENT FOR CO-EXISTENCE AND PEER-TO-PEER MANAGEMENT**

(30) Priority: 04.04.2023 US 202363494173 P; 21.03.2024 US 202418612928
(71) Applicant: Apple Inc., Cupertino, CA 95014 (US)
(72) Inventor: WANG, Qi, Sunnyvale (US); LUI, Yong, Campbell (US); KNECKT, Jarkko L., Los Gatos (US); QIAO, Yijun, San Jose (US); SHANI, Oren, Saratoga (US); DASH, Debashis, San Jose (US); DOMINGUEZ, Charles F., San Carlos (US); JIANG, Jinjing, San Jose (US); YONG, Su Khiong, Palo Alto (US); THAKUR, Sidharth R., San Jose (US); WU, Tianyu, Fremont (US); LAN, Zhou, San Jose (US); BATRA, Anuj, Redwood City (US); ABOUELSEOUD, Mohamed, Burlingame (US)
(74) Representative: COPA Copenhagen Patents

(57) **Abstract**

This disclosure relates to methods for providing unsolicited unavailability announcements to manage the co-existence of Wi-Fi and other technologies (such as Bluetooth) and to manage infrastructure and peer-to-peer connections in a wireless communication system. A wireless device may establish multiple wireless connections on a set of radio resources. The wireless device may transmit an unsolicited unavailability announcement frame, which may include information indicating a time period of future unavailability for the wireless device on the set of radio resources. Such an unsolicited unavailability announcement frame may also include information regarding the device's current availability, for example during which the device plans to initiate a transmit opportunity.

## Description

### TECHNICAL FIELD

The present application relates to wireless communication, including techniques and devices for providing unsolicited unavailability announcements for managing the co-existence of Wi-Fi and other technology (for example, Bluetooth) and managing wireless infrastructure connections and wireless peer-to-peer connections.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs) may take the form of smart phones or tablets that a user typically carries. One aspect of wireless communication that may commonly be performed by mobile devices may include wireless networking, for example over a wireless local area network (WLAN), which may include devices that operate according to one or more communication standards in the IEEE 802.11 family of standards. Such communication can be performed in an infrastructure setting as well as in a peer-to-peer setting.

Additionally, wireless devices may commonly be capable of performing various other types of wireless communication, such as cellular communication (e.g., according to 3GPP cellular communication standards such as LTE and NR) and Bluetooth communication.

In some instances, it may be possible that multiple different wireless communication technologies or multiple interfaces for the same wireless communication technology in a wireless device time share at least some of the same radio resources. Managing such co-existence to reduce or avoid negative impacts from potential collisions, interference, unnecessary rate adaptation, and/or other possible outcomes may be a difficult challenge, with potential for new complications to arise as various wireless communication technologies evolve over time. Accordingly, improvements in the field are desired.

### SUMMARY

Embodiments are presented herein of, *inter alia,* systems, apparatuses, and methods for devices to transmit and receive unsolicited unavailability announcements for co-existence and peer-to-peer management.

A wireless device may include one or more antennas, one or more radios operably coupled to the one or more antennas, and a processor operably coupled to the one or more radios. The wireless device may be configured to establish a connection with an access point through a wireless local area network (WLAN) over one or multiple wireless links, or may be an access point configured to establish a connection with one or more other wireless devices through a WLAN over one or multiple wireless links. The wireless device may operate in each of the wireless links using a respective radio of the one or more radios.

According to the techniques described herein, the wireless device may establish multiple wireless connections that use a partially or fully shared set of radio resources. The wireless device may determine that it may or will be unavailable on one or more of those wireless connections during a future time period, for example due to scheduled communication activity or other co-existence considerations on another of those wireless connections.

The wireless device may provide an indication of the future time period during which it has determined that it may or will be unavailable on one or more of those wireless connections to the communication partner(s) of the wireless device on the wireless connection(s). The indication may be included in an unsolicited unavailability announcement frame configured for use to indicate such time periods of future unavailability.

Wireless devices receiving such an indication of a time period of future unavailability, and determining that the indication applies to them, may be able to avoid transmitting to the sender of the indication during the indicated time period of future unavailability, while at least potentially still being able to use those radio resources for other purposes during the indicated time period, such as for communications with other wireless devices. Thus, at least according to some embodiments, such announcements may help a wireless device reduce or avoid collisions on radio resources shared between multiple wireless connections by the wireless device with limited impact on use of those radio resources by other wireless devices in the vicinity.

The techniques described herein may be implemented in and/or used with a number of different types of devices, including but not limited to cellular phones, tablet computers, accessory and/or wearable computing devices, portable media players, access point wireless devices, base stations and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments;
Figure 2 is a block diagram illustrating an example wireless device, according to some embodiments;
Figure 3 is a block diagram illustrating an example network element or access point, according to some embodiments;
Figure 4 is a flowchart diagram illustrating an example method for providing unsolicited unavailability announcements for managing the co-existence of Wi-Fi and other technology (for example, Bluetooth) and managing wireless infrastructure connections and wireless peer-to-peer connections, according to some embodiments;
Figure 5 illustrates aspects of an example system in which a wireless device dynamically time shares the same link for infrastructure and peer-to-peer wireless connections, according to some embodiments;
Figure 6 illustrates an example communication timeline of a possible scenario in which a wireless device dynamically time shares the same link for infrastructure and peer-to-peer wireless connections, according to some embodiments;
Figures 7-8 illustrate example timelines and frame structures that could be used for indicating current and future availability and unavailability on a link by a wireless device in different scenarios, according to some embodiments;
Figure 9 illustrates an example field structure that could be used to indicate future unavailability on a link by a wireless device, according to some embodiments;
Figure 10 illustrates aspects of an example frame structure that could be used for indicating future unavailability on multiple links by a wireless device, according to some embodiments; and
Figure 11 illustrates examples of possible recipient address field structures in a frame that could be used for indicating current and future availability and unavailability on a link by a wireless device, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:
**Memory Medium** - Any of various types of non-transitory memory devices or storage devices. The term "memory medium" is intended to include any computer system memory or random-access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" may include two or more memory mediums which may reside in different locations, e.g., in different computer systems that are connected over a network. The memory medium may store program instructions (e.g., embodied as computer programs) that may be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.
**User Equipment (UE) (or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices, laptops, wearable devices (e.g., smart watch, smart glasses), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.
**Wireless Device or Station (STA)** - any of various types of computer systems or devices that perform wireless communications. A wireless device can be portable (or mobile) or may be stationary or fixed at a certain location. The terms "station" and "STA" are used similarly. A UE is an example of a wireless device.
**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.
**Base Station or Access Point (AP)** - The term "Base Station" (also called "eNB" or "gNB") has the full breadth of its ordinary meaning, and at least includes a wireless communication station installed at a fixed location and used to communicate as part of a wireless communication system. The term "access point" (or "AP") is typically associated with Wi-Fi-based communications and is used similarly.
**Processing Element (or Processor)** - refers to various elements or combinations of elements that are capable of performing a function in a device, e.g., in a communication device or in a network infrastructure device. Processors may include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.
**IEEE 802.11** - refers to technology based on IEEE 802.11 wireless standards such as 802.11a, 802.11.b, 802.11g, 802.11n, 802.11-2012, 802.11ac, 802.11ad, 802.11ax, 802.11ay, 802.11be, and/or other IEEE 802.11 standards. IEEE 802.11 technology may also be referred to as "Wi-Fi" or "wireless local area network (WLAN)" technology.
**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

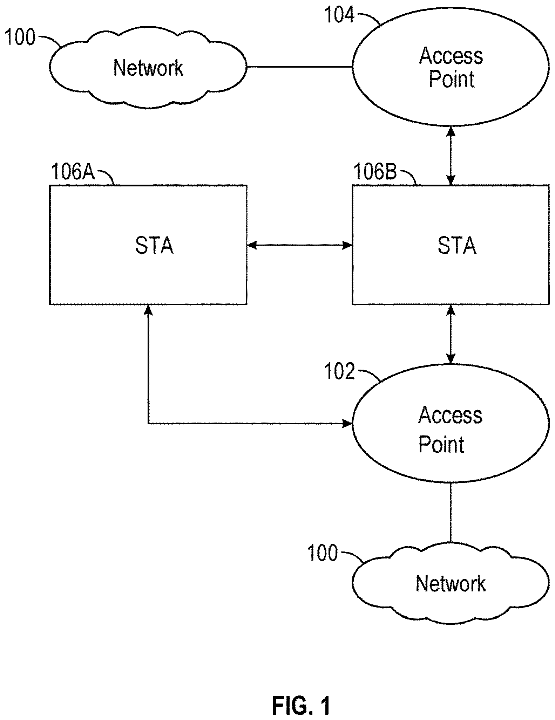

### Figures 1-2 - Wireless Communication System

Figure 1 illustrates an example of a wireless communication system. It is noted that Figure 1 represents one possibility among many, and that features of the present disclosure may be implemented in any of various systems, as desired. For example, embodiments described herein may be implemented in any type of wireless device. The wireless embodiment described below is one example embodiment.

As shown, the exemplary wireless communication system includes an access point (AP) 102, which communicates over a transmission medium with one or more wireless devices 106A, 106B, etc. Wireless devices 106A and 106B may be user devices, such as stations (STAs), non-AP STAs, or WLAN devices.

The STA 106 may be a device with wireless network connectivity such as a mobile phone, a hand-held device, a wearable device, a computer or a tablet, an unmanned aerial vehicle (UAV), an unmanned aerial controller (UAC), an automobile, or virtually any type of wireless device. The STA 106 may include a processor (processing element) that is configured to execute program instructions stored in memory. The STA 106 may perform any of the method embodiments described herein by executing such stored instructions. Alternatively, or in addition, the STA 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein.

The AP 102 may be a stand-alone AP or an enterprise AP, and may include hardware that enables wireless communication with the STA devices 106A and 106B. The AP 102 may also be equipped to communicate with a network 100 (e.g., a WLAN, an enterprise network, and/or another communication network connected to the Internet, among various possibilities). Thus, the AP 102 may facilitate communication among the STA devices 106 and/or between the STA devices 106 and the network 100. In other implementations, AP 102 can be configured to provide communications over one or more wireless technologies, such as any, any combination of, or all of 802.11 a, b, g, n, ac, ad, ax, ay, be and/or other 802.11 versions, or a cellular protocol, such as 5G or LTE, including in an unlicensed band (e.g., LAA, NR-U).

The communication area (or coverage area) of the AP 102 may be referred to as a basic service area (BSA) or cell. The AP 102 and the STAs 106 may be configured to communicate over the transmission medium using any of various radio access technologies (RATs) or wireless communication technologies, such as Wi-Fi, LTE, LTE-Advanced (LTE-A), 5G NR, ultra-wideband (UWB), etc.

AP 102 and other similar access points (not shown) operating according to one or more wireless communication technologies may thus be provided as a network, which may provide continuous or nearly continuous overlapping service to STA devices 106A-B and similar devices over a geographic area, e.g., via one or more communication technologies. A STA may roam from one AP to another directly, or may transition between APs and cellular network cells.

Note that at least in some instances a STA device 106 may be capable of communicating using any of multiple wireless communication technologies. For example, a STA device 106 might be configured to communicate using one or more of Wi-Fi, LTE, LTE-A, 5G NR, Bluetooth, UWB, one or more satellite systems, etc. Other combinations of wireless communication technologies (including more than two wireless communication technologies) are also possible. Likewise, in some instances a STA device 106 can be configured to communicate using only a single wireless communication technology.

As shown, the exemplary wireless communication system also can include an access point (AP) 104, which communicates over a transmission medium with the wireless device 106B. The AP 104 also provides communicative connectivity to the network 100. Thus, according to some embodiments, wireless devices may be able to connect to either or both of the AP 102 (or a cellular base station) and the AP 104 (or another access point) to access the network 100. For example, a STA may roam from AP 102 to AP 104 based on one or more factors, such as coverage, interference, and capabilities. Note that it may also be possible for the AP 104 to provide access to a different network (e.g., an enterprise Wi-Fi network, a home Wi-Fi network, etc.) than the network to which the AP 102 provides access.

The STAs 106A and 106B may include handheld devices such as smart phones or tablets, wearable devices such as smart watches or smart glasses, and/or may include any of various types of devices with wireless communication capability. For example, one or more of the STAs 106A and/or 106B may be a wireless device intended for stationary or nomadic deployment such as an appliance, measurement device, control device, etc.

The STA 106B may also be configured to communicate with the STA 106A. For example, the STA 106A and STA 106B may be capable of performing direct device-to-device (D2D) communication. In some embodiments, such direct communication between UEs may also or alternatively be referred to as peer-to-peer (P2P) communication. The direct communication may be supported by the AP 102 (e.g., the AP 102 may facilitate discovery, among various possible forms of assistance), or may be performed in a manner unsupported by the AP 102. Such P2P communication may be performed using 3GPP-based D2D communication techniques, Wi-Fi-based P2P communication techniques, UWB, BT, and/or any of various other direct communication techniques, according to various embodiments.

The STA 106 may include one or more devices or integrated circuits for facilitating wireless communication, potentially including a Wi-Fi modem, a cellular modem and/or one or more other wireless modems. The wireless modem(s) may include one or more processors (processor elements) and various hardware components as described herein. The STA 106 may perform any of (or any portion of) the method embodiments described herein by executing instructions on one or more programmable processors. For example, the STA 106 may be configured to perform techniques for providing unsolicited unavailability announcements in a wireless communication system, such as according to the various methods described herein. Alternatively, or in addition, the one or more processors may be one or more programmable hardware elements such as an FPGA (field-programmable gate array), or other circuitry, that is configured to perform any of the method embodiments described herein, or any portion of any of the method embodiments described herein. The wireless modem(s) described herein may be used in a STA device as defined herein, a wireless device as defined herein, or a communication device as defined herein. The wireless modem described herein may also be used in an AP, a base station, a pico cell, a femto cell, or other similar network side device.

The STA 106 may include one or more antennas for communicating using one or more wireless communication protocols or radio access technologies. In some embodiments, the STA 106 can be configured to communicate using a single shared radio. The shared radio may couple to a single antenna, or may couple to multiple antennas (e.g., for MIMO) for performing wireless communications. Alternatively, the STA 106 may include two or more radios, each of which may be configured to communicate via a respective wireless link. Other configurations are also possible.

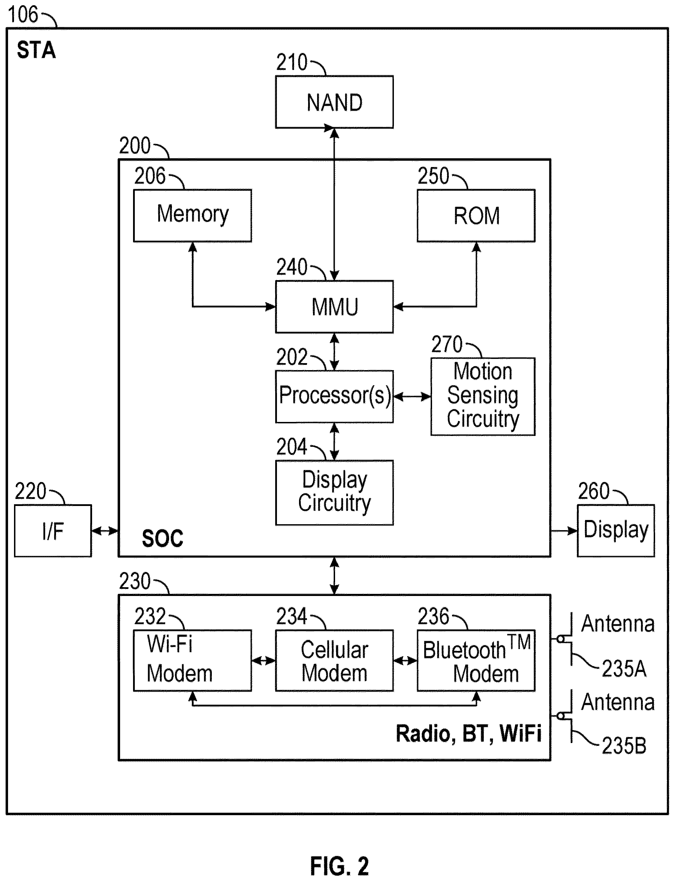

### Figure 2 - Example Block Diagram of a STA Device

Figure 2 illustrates one possible block diagram of a STA device, such as STA 106. In some instances, the STA 106 may additionally or alternatively be referred to as a UE 106. STA 106 also may be referred to as a non-AP STA 106. As shown, the STA 106 may include a system on chip (SOC) 200, which may include one or more portions configured for various purposes. For example, as shown, the SOC 200 may include processor(s) 202 which may execute program instructions for the STA 106, and display circuitry 204 which may perform graphics processing and provide display signals to the display 260. The SOC 200 may also include motion sensing circuitry 270 which may detect motion of the STA 106, for example using a gyroscope, accelerometer, and/or any of various other motion sensing components. The processor(s) 202 may also be coupled to memory management unit (MMU) 240, which may be configured to receive addresses from the processor(s) 202 and translate those addresses to locations in memory (e.g., memory 206, read only memory (ROM) 250, flash memory 210). The MMU 240 may be configured to perform memory protection and page table translation or set up. In some embodiments, the MMU 240 may be included as a portion of the processor(s) 202.

As shown, the SOC 200 may be coupled to various other circuits of the STA 106. For example, the STA 106 may include various types of memory (e.g., including NAND flash 210), a connector interface 220 (e.g., for coupling to a computer system, dock, charging station, etc.), the display 260, and wireless communication circuitry 230 (e.g., for LTE, LTE-A, 5G NR, Bluetooth, Wi-Fi, NFC, GPS, UWB, etc.).

The STA 106 may include at least one antenna, and in some embodiments multiple antennas 235a and 235b, for performing wireless communication with access points, base stations, and/or other devices. For example, the STA 106 may use antennas 235a and 235b to perform the wireless communication. As noted above, the STA 106 may in some embodiments be configured to communicate wirelessly using multiple wireless communication standards or radio access technologies (RATs).

The wireless communication circuitry 230 may include a Wi-Fi modem 232, a cellular modem 234, and a Bluetooth modem 236. The Wi-Fi modem 232 is for enabling the STA 106 to perform Wi-Fi or other WLAN communications, e.g., on an 802.11 network. The Bluetooth modem 236 is for enabling the STA 106 to perform Bluetooth communications. The cellular modem 234 may be a cellular modem capable of performing cellular communication according to one or more cellular communication technologies, e.g., in accordance with one or more 3GPP specifications.

As described herein, STA 106 may include hardware and software components for implementing embodiments of this disclosure. For example, one or more components of the wireless communication circuitry 230 (e.g., Wi-Fi modem 232, cellular modem 234, BT modem 236) of the STA 106 may be configured to implement part or all of the methods for providing unsolicited unavailability announcements described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

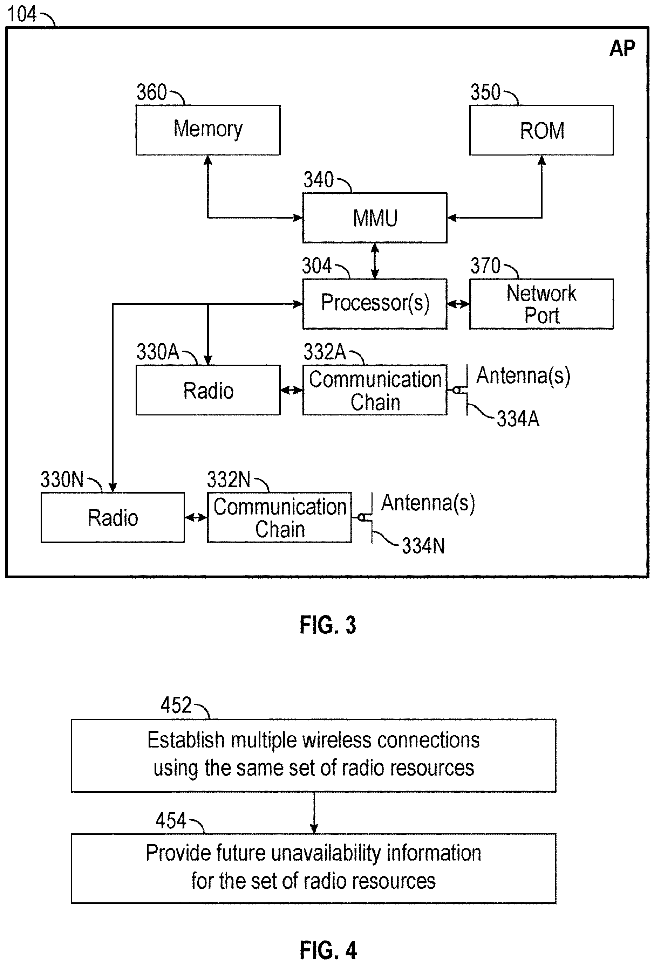

### Figure 3 - Block Diagram of an Access Point

Figure 3 illustrates an example block diagram of an access point (AP) 104, according to some embodiments. In some instances (e.g., in an 802.11 communication context), the AP 104 may also be referred to as a station (STA), and possibly more particularly as an AP STA. It is noted that the AP of Figure 3 is merely one example of a possible access point. As shown, AP 104 may include processor(s) 304 which may execute program instructions for the AP 104. The processor(s) 304 may also be coupled to memory management unit (MMU) 340, which may be configured to receive addresses from the processor(s) 304 and translate those addresses to locations in memory (e.g., memory 360 and read only memory (ROM) 350) or to other circuits or devices.

The AP 104 may include at least one network port 370. The network port 370 may be configured to couple to a network and provide multiple devices, such as STA devices 106, with access to the network, for example as described herein above in Figure 1.

The network port 370 (or an additional network port) may also or alternatively be configured to couple to a cellular network, e.g., a core network of a cellular service provider. The core network may provide mobility related services and/or other services to a plurality of devices, such as UE devices 106. In some cases, the network port 370 may couple to a telephone network via the core network, and/or the core network may provide a telephone network (e.g., among other UE devices serviced by the cellular service provider).

The AP 104 may include one or more radios 330A-330N, each of which may be coupled to a respective communication chain and at least one antenna 334, and possibly multiple antennas. The antenna(s) 334 may be configured to operate as a wireless transceiver and may be further configured to communicate with UE devices 106 via radio 330. The antenna(s) 334A-N communicate with their respective radios 330A-N via communication chains 332AN. Communication chains 332 may be receive chains, transmit chains, or both. The radios 330A-N may be configured to communicate in accordance with various wireless communication standards, including, but not limited to, LTE, LTE-A, 5G NR, UWB, Wi-Fi, BT, etc. The AP 104 may be configured to operate on multiple wireless links using the one or more radios 330A-N, wherein each radio is used to operate on a respective wireless link.

The AP 104 may be configured to communicate wirelessly using one or multiple wireless communication standards. In some instances, the AP 104 may include multiple radios, which may enable the network entity to communicate according to multiple wireless communication technologies. For example, as one possibility, the AP 104 may include a 4G LTE or 5G NR radio for performing communication according to a 3GPP wireless communication technology as well as a Wi-Fi radio for performing communication according to Wi-Fi. In such a case, the AP 104 may be capable of operating as both an cellular base station and a Wi-Fi access point. As another possibility, the AP 104 may include a multi-mode radio which is capable of performing communications according to any of multiple wireless communication technologies (e.g., 5G NR and Wi-Fi, 5G NR and LTE, etc.). As still another possibility, the AP 104 may be configured to act exclusively as a Wi-Fi access point, e.g., without cellular communication capability.

As described further herein, the AP 104 may include hardware and software components for implementing or supporting implementation of features described herein such as providing unsolicited unavailability announcements, among various other possible features. The processor 304 of the AP 104 may be configured to implement or support implementation of part or all of the methods described herein, e.g., by executing program instructions stored on a memory medium (e.g., a non-transitory computer-readable memory medium) to operate multiple wireless links using multiple respective radios. Alternatively, the processor 304 may be configured as a programmable hardware element, such as an FPGA (Field Programmable Gate Array), or ASIC (Application Specific Integrated Circuit), or a combination thereof. Alternatively (or in addition) the processor 304 of the AP 104, in conjunction with one or more of the other components 330, 332, 334, 340, 350, 360, 370 may be configured to implement or support implementation of part or all of the features described herein.

### Figure 4 - Unsolicited Unavailability Announcement

In wireless communication, it can occur that a wireless device can communicate on multiple wireless connections using partially or fully shared radio resources, for example if multiple Wi-Fi connections (e.g., an infrastructure Wi-Fi link with an access point wireless device and a peer-to-peer Wi-Fi link with a non-access point wireless device) are established using a common set of devices, or if multiple connections established according to different wireless communication technologies (e.g., Wi-Fi and Bluetooth, Wi-Fi and 3GPP 5G NR, etc.) use overlapping spectrum portions, it could occur that a wireless device dynamically time-shares those radio resources that are common to the different connections. The wireless device also may implement one or more coexistence techniques to mitigate interference, e.g., so that a transmission does not interfere with a concurrent reception.

Managing such multiple connections may be important, for example in order to prevent or reduce the likelihood of collisions occurring between transmissions by communication partners that may not otherwise be aware that the communication (i.e., transmission and/or reception) on their connections with the wireless device are concurrent with communication (i.e., transmission and/or reception) on other wireless connections by the wireless device. In addition to the direct benefits of reducing or avoiding such collisions (or interference), such as reducing or avoiding potential packet loss that could result from such collisions, this may also help reduce or prevent rate adaptation and/or other interference mitigation techniques (that otherwise are not needed for channel conditions) from being enabled, which may improve overall link use efficiency.

One possible set of techniques for managing multiple wireless connections of a wireless device that share radio resources may include a set of techniques for supporting transmission and reception of unsolicited unavailability announcements by a wireless device, for example to help inform some or all of the wireless device's communication partners of upcoming periods of time during which the wireless device will be unavailable to them on a given set of radio resources. Figure 4 is a flowchart diagram illustrating one such method for providing unsolicited unavailability announcements for managing the co-existence of Wi-Fi and other technology and for managing the co-existence of Wi-Fi infrastructure connections and Wi-Fi peer-to-peer connections, according to some embodiments. In various embodiments, some of the elements of the methods shown may be performed concurrently, in a different order than shown, may be substituted for by one or more other method elements, or may be omitted. Additional method elements may also be performed as desired.

Aspects of the method of Figure 4 may be implemented by a wireless device, such as a AP 104 or STA 106 illustrated in and described with respect to Figures 1-3, or more generally in conjunction with any of the computer circuitry, systems, devices, elements, or components shown in the Figures, among others, as desired. For example, a processor (and/or other hardware) of such a device may be configured to cause the device to perform any combination of the illustrated method elements and/or other method elements.

Note that while at least some elements of the method of Figure 4 are described in a manner relating to the use of communication techniques and/or features associated with IEEE 802.11 specification documents, such description is not intended to be limiting to the disclosure, and aspects of the method of Figure 4 may be used in any suitable wireless communication system, as desired. As shown, the methods may operate as follows.

A ("first") wireless device may establish multiple wireless connections using the same set of radio resources (452). Thus, for example, it may be the case that at least a "first" wireless connection is established using a "first" set of radio resources, and a "second" wireless connection is established also using the first set of radio resources. The wireless connections may include associations established using Wi-Fi, wireless communication techniques that are based at least part on Wi-Fi, and/or any of various other wireless communication technologies, according to various embodiments.

In some embodiments, the first wireless connection may include an infrastructure Wi-Fi connection. For example, an access point (AP) wireless device may provide beacon transmissions including information for associating with the AP wireless device, and one or more other wireless devices (e.g., non-AP wireless devices, which could include the first wireless device) may request to associate with the AP wireless device using the information provided in the beacon transmissions, as one possibility.

In some embodiments, the second wireless connection may include a peer-to-peer (P2P) Wi-Fi connection, or a non-Wi-Fi connection such as a Bluetooth connection. For example, the first wireless device may form a P2P Wi-Fi connection with another non-AP wireless device as the second wireless connection, as one possibility. As another example, the first wireless device may form a Bluetooth wireless connection with a paired Bluetooth device as the second wireless connection, or with another wireless device according to another wireless communication technology, as further possibilities.

Variations and/or other techniques for establishing an association are also possible. In some embodiments, it may be possible that the multiple wireless connections established by the first wireless device using the first set of radio resources could include more than two wireless connections. Note also that the radio resources shared by the multiple wireless connections may include part or all of the spectrum portions used by each of the wireless connections, according to various embodiments; in other words, the radio resources of the multiple wireless connections may be partially overlapping, or may be fully overlapping, in various instances. In some instances, the first wireless device may additionally have one or more wireless connections that use radio resources that do not overlap with the first set of radio resources.

In scenarios in which the wireless connections include at least one infrastructure connection, the AP wireless device may provide wireless local area network functionality to associated wireless devices, at least according to some embodiments. As part of the wireless local area network functionality, it may be possible for wireless devices to contend for medium access and perform wireless transmissions on one or more wireless communication channels (each of which could possibly include multiple sub-channels) according to general provisions of the wireless communication technology in use by the wireless local area network (e.g., Wi-Fi, as one possibility) and/or network specific parameters configured by the AP wireless device.

The first wireless device may provide future unavailability information for the first set of radio resources (454). The future unavailability information may be provided as part of an unsolicited unavailability announcement (UUA), which may be a standalone frame, may be a part of a frame header (e.g., contained in A-control of media access control (MAC) headers for a frame), or may be included in some other container, according to various embodiments. At least in some embodiments, the UUA frame may be transmitted using the first set of radio resources.

The UUA frame may include any of a variety of types of information, according to various embodiments. For example, at least in some embodiments, in addition to future unavailability information, the UUA frame may include any or all of current availability information, recipient address information, transmitter address information, frame control information, frame check sequence (FCS) information, and/or any of various other possible types of information.

In some embodiments, the recipient address information may be used to indicate one or more intended recipients for the UUA information (e.g., wireless devices to which the indicated periods of current availability and/or future unavailability apply). There may be multiple options for what recipient address information is included, according to various embodiments. As one option, it may be possible that the recipient address information includes a broadcast MAC address. In some instances, indicating the broadcast MAC address as the recipient address may indicate that the information in the UUA frame applies to all recipients of the UUA frame. As another option, it may be possible that the recipient address information includes a unicast MAC address. In some instances, indicating the unicast MAC address of the first wireless device as the recipient address may indicate (e.g., similar to use of a broadcast MAC address) that the information in the UUA frame applies to all recipients of the UUA frame, possibly in conjunction with inclusion of the unicast MAC address of the first wireless device as the transmitter address. In some instances, indicating the unicast MAC address of another wireless device as the recipient address may indicate that the information in the UUA frame applies to that wireless device specifically.

The transmitter address information may include the unicast MAC address of the first wireless device, in some embodiments. Note that it may also be possible that transmitter address information is not included in the UUA frame.

The current availability information, if included, may be provided to indicate a time period of current availability and/or medium usage for the first wireless device on the first set of radio resources. In some embodiments, the current availability information may include a value configured to indicate a duration of a time period of current availability for the first wireless device on the first set of radio resources, which may be configured to begin upon completion of transmission of the UUA frame (or the frame containing the UUA information) and last for the duration indicated by the duration value in the current availability field. In some instances, the current availability time period may be used by the first wireless device to initiate a transmit opportunity (TXOP). Note that it may also be possible that a current availability information field included in the UUA frame can indicate no current availability (e.g., by setting the duration of the time period of current availability to 0, as one possibility). Note that it may be the case that even wireless devices that are not the intended recipients of the UUA frame can use the current availability information provided by the first wireless device, for example to set a network allocation vector (NAV), which may help reduce or avoid collisions on the first set of radio resources, at least in some instances.

The future unavailability information may indicate a ("first") time period of future unavailability for the first wireless device on the first set of radio resources. The first time period of future unavailability for the first wireless device on the first set of radio resources may be determined by the first wireless device based at least in part on a time sharing configuration of the first set of radio resources by the first wireless device between the first wireless connection and the second wireless connection, or more generally between any of the multiple wireless connections between which the first wireless device is dynamically time-sharing the first set of radio resources. For example, the first wireless device may determine that due to scheduling or other co-existence considerations on one of the wireless connections that time-share the first set of radio resources, the first wireless device will be unavailable on another of the wireless connections that time-share the first set of radio resources during a certain time period, which time period may thus be determined as the first time period of future unavailability.

In some instances, the first time period of future unavailability may be indicated using a ("first") future unavailability start time value and a ("first") future unavailability duration value. The first future unavailability start time value may be indicated as an offset from an end of the time period of current availability for the first wireless device, as one possibility. Note that such an approach may necessitate dynamic determination of the first future unavailability start time value based on the time at which medium access is obtained by the first wireless device to transmit the UUA frame, in some instances, which could potentially increase implementation complexity. As another possibility, first future unavailability start time value may be indicated as a time synchronization function (TSF) value. Such an approach may not be dependent on the time at which medium access is obtained by the first wireless device to transmit the UUA frame, but may be limited in applicability to wireless devices in the wireless communication system associated with the TSF value. In other words, it may be possible that the first future unavailability start time value indicated using such an approach would not be understood both by an AP device with which the first wireless device is associated via an infrastructure Wi-Fi connection and a peer device with which the first wireless device communicates via a P2P Wi-Fi connection since those connections may use different TSF values (e.g., without a common time base), at least according to some embodiments.

In some embodiments, the future unavailability information may further indicate one or more additional time periods of future unavailability for the first wireless device, which could also apply to the first set of radio resources and/or could apply to one or more additional sets of radio resources. For example, the UUA frame may further include information indicating another ("second") time period of future unavailability for the first wireless device on either the same ("first") or another ("second") set of radio resources, and so on for any number (possibly up to a configured limit) of time periods of future unavailability. In such a scenario, it may be the case that link identification information is included with each instance of a time period of future unavailability indicated in the future unavailability information to indicate the set of radio resources corresponding to the indicated time period of future unavailability for the first wireless device.

A wireless device receiving the UUA frame from the first wireless device may determine whether to transmit to the first wireless device and/or other wireless devices during the first time period of future unavailability based at least in part on the information included in the UUA frame. For example, such a wireless device may determine to not transmit to the first wireless device during the first time period of future unavailability which requires the reception to use the first set of radio resources based at least in part on the UUA frame.

In some embodiments, it may be possible that the first wireless device determines the content of the UUA frame based at least in part on whether one or more wireless connections of the first wireless device that use the first set of radio resources and/or recipient devices of the UUA frame are "legacy" wireless devices that may not be configured to understand the UUA frame in full, or all wireless connections of the first wireless device that use the first set of radio resources and/or recipient devices of the UUA frame are configured to understand the UUA frame in full (e.g., comply with a wireless communication standard version providing UUA frame specifications). For example, in some instances, if the first wireless device is associated with a legacy AP wireless device, it may not be possible to indicate a time period of current availability, and the first wireless device may instead use the current availability duration value to indicate a time duration from the end of the UUA frame (or the frame containing the UUA information) through the end of the first time period of future unavailability. The legacy AP wireless device, and potentially any legacy peer wireless devices, may determine based at least in part on this indication to set NAV though the end of the first time period of future unavailability, such that transmission by such legacy devices to the first wireless device may be avoided during the first time period of future unavailability, albeit potentially at a cost of also preventing such legacy devices from transmitting to other wireless devices using the first set of radio resources between the end of the UUA frame (or the frame containing the UUA information) and the end of the first time period of future unavailability. A peer wireless device that receives such a UUA frame, and that is configured to understand the UUA frame in full, may determine based on the end time point indicated in the current availability duration field matching the end time point of the first time period of future unavailability that the UUA frame is indicating to avoid P2P transmission to the first wireless device during the first time period of future unavailability without limiting transmission to the first wireless device during the time period between end of the UUA frame (or the frame containing the UUA information) and the start of the first time period of future unavailability, or transmission to any other wireless device during the first time period of future unavailability, at least according to some embodiments.

Note that the first wireless device may also be capable of receiving and understanding such UUA frame transmissions from other (e.g., peer or AP) wireless devices, and of making medium use decisions based at least in part on such information. For example, the first wireless device could receive a UUA frame indicating a time period of future unavailability from another wireless device on a set of radio resources. In such a scenario, the first wireless device may determine to not transmit to that wireless device during the indicated time period of future unavailability that requires the reception using that set of radio resources of the UUA frame transmitter based at least in part on the UUA frame (e.g., if the recipient address information indicates that the UUA frame is intended to apply to the first wireless device).

Thus, according to the method of Figure 4, it may be possible to support use of unsolicited unavailability announcements to manage the co-existence of multiple technologies (e.g., Wi-Fi and Bluetooth) and to manage Wi-Fi infrastructure and Wi-Fi peer-to-peer communication, for example to provide better handling of time shares between infrastructure and P2P or co-existence connections, among various possibilities. Such techniques may help reduce or avoid collisions, coexistence interference, unnecessary rate reduction from link adaptation, and/or provide any of a variety of other possible benefits, at least according to some embodiments.

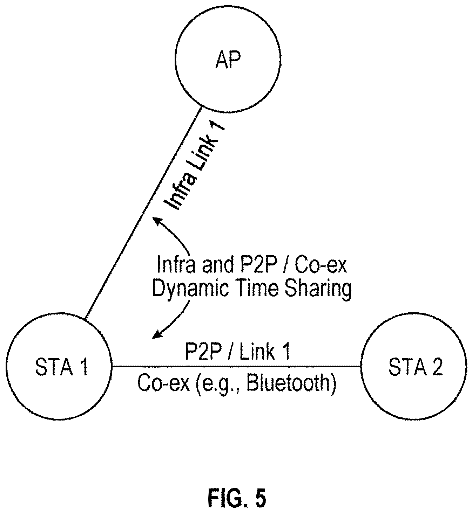

### Figures 5-11 and Additional Information

Figures 5-11 illustrate further aspects that might be used in conjunction with the method of Figure 4 if desired. It should be noted, however, that the exemplary details illustrated in and described with respect to Figures 5-11 are not intended to be limiting to the disclosure as a whole: numerous variations and alternatives to the details provided herein below are possible and should be considered within the scope of the disclosure.

A WLAN device may often need to manage multiple Wi-Fi interfaces. For example, a STA device could establish an infrastructure Wi-Fi connection with an AP device and a Wi-Fi P2P connection with another STA device, both on the same link. A similar scenario could occur based on co-existence with other technologies. For example, a STA device could establish an infrastructure Wi-Fi connection with an AP device and a co-ex (e.g., Bluetooth) connection, both on the same link. In both such scenarios, at least some of the same radio resources may be time shared by the STA device by the infrastructure connection and the P2P or co-ex technology connection. Thus, at least some of the challenges presented by both such scenarios may potentially be equivalent, at least in some ways.

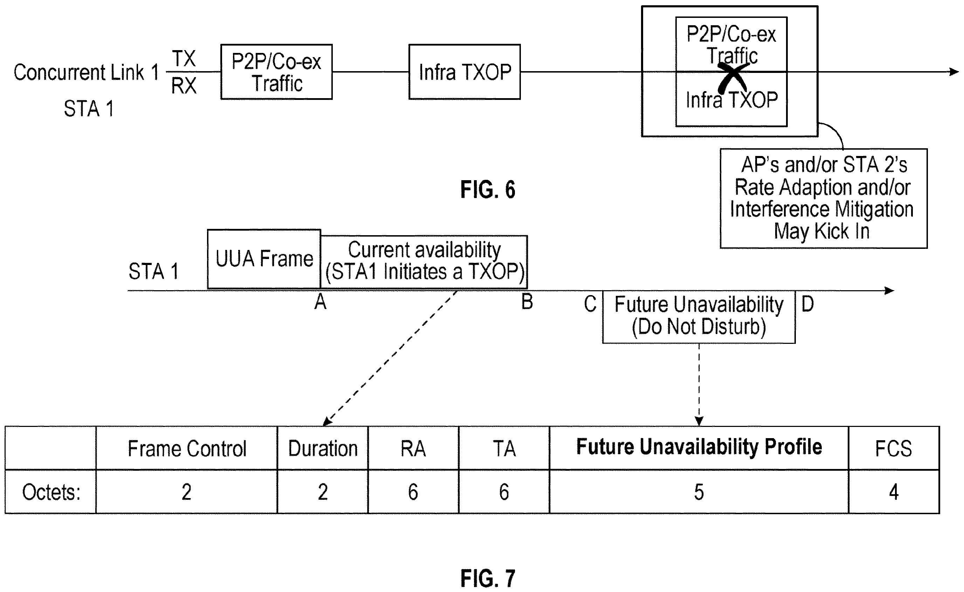

Figure 5 illustrates aspects of an example of a system in which a wireless device dynamically time shares the same link for infrastructure (or simply 'infra') and peer-to-peer wireless connections, according to some embodiments. In the example scenario of Figure 5, it may be the case that `STA1' operates on a single link for an infrastructure connection with 'AP,' and that STA1 operates on the same single link for a P2P connection with `STA2' (or co-ex connection). It may also be the case that `STA1' operates on a single link for an infrastructure connection with 'AP,' and that STA1 communicates with another device via other technology (e.g., Bluetooth). STA1 may dynamically switch between the infra connection and P2P/co-ex connection. Figure 6 illustrates an example communication timeline of such a possible scenario in which a wireless device dynamically time shares the same link for infrastructure and peer-to-peer wireless connections, or dynamically time shares one or more radio resources between the Wi-Fi technology and the other technology (such as Bluetooth), according to some embodiments. As shown, as the AP and STA2 (or co-ex technology) may be unaware of the activity on the other connection, it may be possible that the AP's and the STA2's (or the AP's and the co-ex technology's) communication can collide, which could result in lost communication packets. Further, such collisions could result in the AP and/or the STA2 reducing the transmission rate (e.g., performing rate adaptation and/or interference mitigation) for the connection with STA1, for example as a result of taking the packet loss as an indicator of a poor channel conditions. Such action may not be justified by the actual channel conditions, and could negatively impact throughput, power consumption, spectrum use efficiency, etc.

A wireless device in such a scenario, among various other possible scenarios, may have availability and/or unavailability information to share, e.g., to potentially improve overall system performance, potentially even without solicitation of such information from its communication peer. For example, driven by scheduled P2P/co-ex events, STA1 might have information to share with the AP device of its infra connection without the inquiry by the AP, as one possibility.

Accordingly, techniques are described herein for a device (e.g., STA1) to transmit an unsolicited unavailability announcement (UUA) frame to share its availability/unavailability information due to events such as (but not necessarily limited to) P2P or co-existence events. Such a frame may contain either or both of future unavailability and/or current availability information, according to some embodiments. Figures 7-8 illustrate example timelines and UUA frame structures that could be used for indicating current and future availability and unavailability on a link by a wireless device in different scenarios, according to some embodiments.

In particular, Figure 7 illustrates aspects of an example scenario in which both current availability information and future unavailability information is indicated by a wireless device in a UUA frame. The current availability information may be indicated by the `duration' field of the UUA frame, and a wireless device may initiate a transmit opportunity (TXOP) during the time indicated by this "duration" field. The current availability is shown in the illustrated timeline as having a time duration from time 'A' to time 'B'. The future unavailability information may be indicated by the `future unavailability profile' field of the UUA frame. The future unavailability is shown in the illustrated timeline as having a time duration from time 'C' to time 'D'.

In the scenario of Figure 7, it may be the case that the STA sending the UUA frame is associated to an AP configured to understand the UUA frame, and has no P2P connection, or has P2P connection only with STAs configured to understand the UUA frame. For example, the STA, associated AP, and any P2P STAs may all be of the same generation of the same wireless communication technology (e.g., the 802.11 generation associated with the ultra high reliability (UHR) study group, as one possibility). In such a case, the AP may understand from the UUA frame to set the network allocation vector (NAV) from A to B, and to perform no transmission to the STA sending the UUA frame during the time from C to D. The AP may transmit to other STAs during the time from B to D. Other STAs configured to understand the UUA frame may also set the NAV from A to B, and may understand that the end point time included in the duration field (B) is earlier than the end time point included in the future unavailability field (D). Accordingly, such STAs may perform no P2P transmission to the STA sending the UUA frame during the time from C to D, but may transmit to other STAs during the time from B to D. It may be the case that a STA not explicitly configured to understand the UUA frame (a 'legacy' STA) sets the NAV from A to B based on the duration field, and may transmit to the AP or any other STAs during the time from B to D.

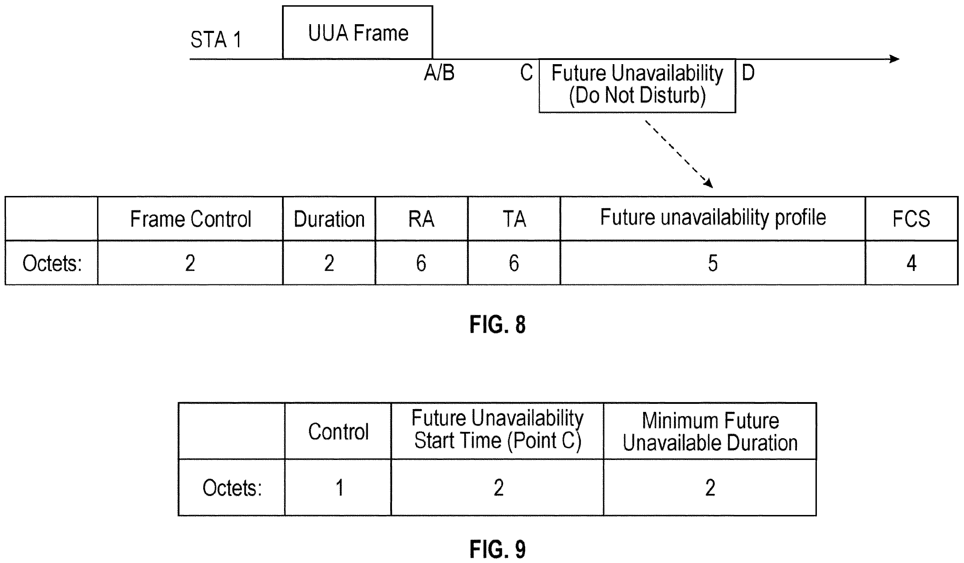

Figure 8 illustrates aspects of an example scenario in which the STA sending the UUA frame is associated to an AP that is not explicitly configured to understand the UUA frame (a `legacy' AP). The STA sending the UUA frame may also have one or more P2P connections with one or more peer STAs that are configured to understand the UUA frame, and possibly with one or more legacy STAs. Note that in this scenario, it may be the case that the UUA frame is used to convey only future unavailability information (e.g., current availability duration may be 0, such that time points A and B collapse into the same time point). It may still be possible for the STA sending the UUA to initiate its own TXOP from time B to point C, but it may be the case that such a TXOP is not initiated using the UUA frame.

In the scenario of Figure 8, in order to convey the future unavailability effectively to the legacy AP, the duration field may also be set to indicate the duration from time point B to the time point of D. The Future Unavailable Profile of the UUA frame may be set to the duration from time point C to time point D. Accordingly, the associated legacy AP may set NAV from B to D, and may perform no transmission to the STA sending the UUA or other STAs during the time from B to D. Similarly, any legacy STAs may set NAV from B to D, and may perform no P2P transmission to the STA sending the UUA or other STAs during the time from B to D. For any STAs configured to understand the UUA, such STAs may recognize that the end time point included in the duration field is the same as the end time point included in the future unavailability field, and may correspondingly determine to not set NAV and to perform no P2P transmission to the STA sending the UUA during the time from C to D. The STA may be able to transmit to an AP or other STAs during the time from C to D.

Regarding the field structure of the future unavailability field, there may be multiple possible options for how to indicate the time period of future unavailability. Figure 9 illustrates one possible example of a field structure that could be used to indicate future unavailability on a link by a wireless device, according to some embodiments. As shown, the field could include a control subfield, a future unavailability start time subfield (e.g., for indicating time point C), and a future unavailability duration subfield (e.g., for indicating an amount of time for which the sender is unavailable on the link, which can be used with time point C to determine time point D). Note that the window of future unavailability indicated in the UUA frame may represent a minimum future unavailability (e.g., such that the sender may be unavailable beyond time point D), a maximum future unavailability (e.g., such that the sender may be unavailable at most until time point D), or an exact future unavailability (e.g., such that the sender may be unavailable at precisely time point D), among various possibilities.

Given such a future unavailability field structure, there may further be multiple options for specifying the time point C. For example, as one possibility, an offset value (e.g., relative to time point B) can be indicated. Such an approach may function to effectively indicate the time point C to both infrastructure basic service set (BSS) and P2P connections. However, it may be the case that in this approach the value used to indicate the time point C may depend on the time that medium is obtained to transmit the UUA, such that real-time insertion of the point C value into the UUA right before its transmission may be needed. As another possibility, the timing synchronization function (TSF) value of the time point C may be indicated. Such a value may be determined independently of the time that the medium is obtained to transmit the UUA (e.g., based on an absolute reference time), which may reduce implementation complexity. However, since the TSF over P2P connection may be different from the TSF over infrastructure BSS, in this approach it may not be possible to indicate the time point C to both infrastructure BSS and P2P connections using a single TSF value, at least according to some embodiments. Thus, a device may need to convert the announced TSF value of a different time base to its own time base in order to use the time information, in some embodiments.

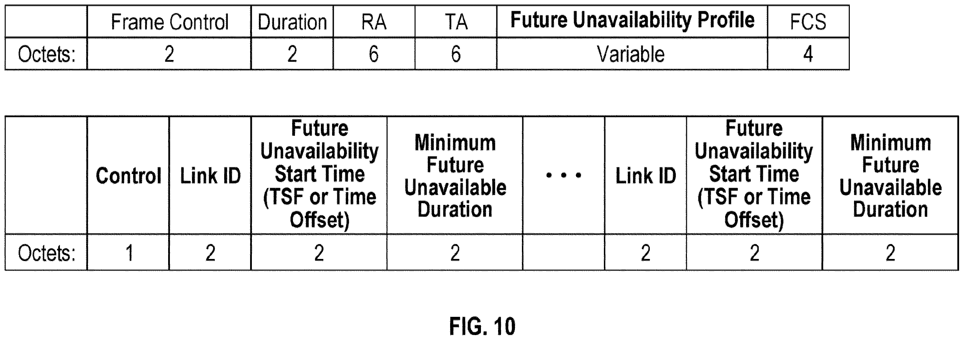

In some embodiments, it may be possible to use an expanded future unavailability field of a UUA frame to indicate unavailability information for multiple links. Figure 10 illustrates aspects of an example of such a frame structure that could be used for indicating future unavailability on multiple links by a wireless device, according to some embodiments. As shown, in such a scenario, it may be the case that the future unavailability profile field has a variable length, e.g., to account for the possibility of including information relating to multiple links. The future unavailability profile field may include a future unavailability start time subfield, a future unavailability duration subfield, and link identifier subfield for each link for which such information is provided. The future unavailability start time may be expressed as either a Time Synchronization Function (TSF) time value or a time offset relative to a time reference point, such as the end time of the current availability. As another possibility, when the future availability information is the same for multiple links, the future unavailability Profile field may include a single set of future unavailability start time and minimum future unavailable duration and a corresponding unavailability link bitmap to indicate the applicable links for the indicated unavailability, where the bit corresponding to the link that has the indicated unavailability is set to 1. Other ways of signaling future unavailability for multiple links are also possible.

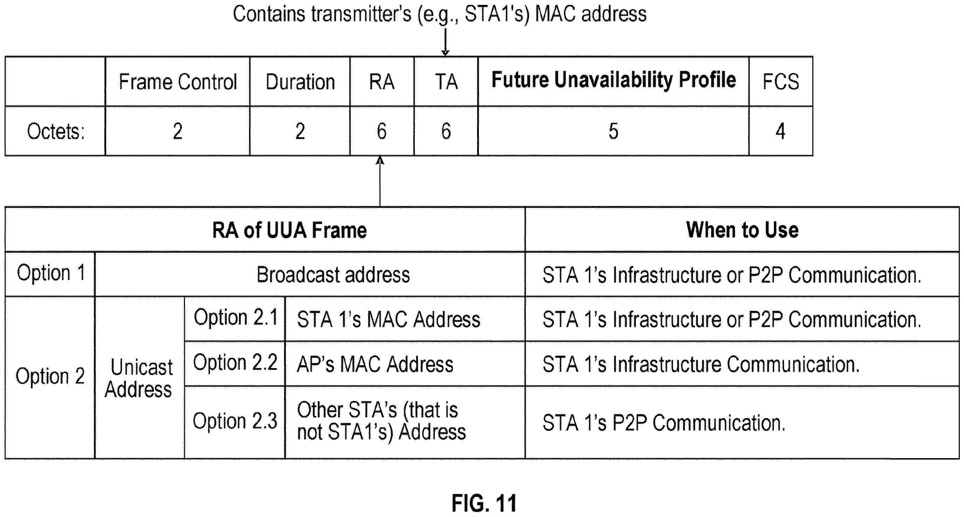

Another consideration for such a UUA frame may include what information to provide in the recipient address (RA) field of the UUA frame. Figure 11 illustrates examples of how such a recipient address field in a UUA frame could be used, according to some embodiments. As shown, as one possibility, a broadcast address can be used as the recipient address for the UUA frame. Such an option may be used for infrastructure or P2P communication, at least according to some embodiments, for example to indicate the sender's future unavailability indiscriminately to any listening devices. As another possibility, a unicast address can be used as the recipient address for the UUA frame. If the sender's media access control (MAC) address is used, this option may also potentially be used for infrastructure or P2P communication, at least according to some embodiments, for example again to indicate the sender's future unavailability indiscriminately to any listening devices. If an AP's MAC address is used, this option may be used for infrastructure communication, e.g., to specifically indicate the sender's future unavailability to the AP. If another STA's MAC address is used, this option may be used for P2P communication, e.g., to specifically indicate the sender's future unavailability to the peer STA. Note that the transmitter's MAC address may generally be indicated in the transmitter address (TA) field in any of these scenarios. Alternatively, it may be possible that a frame structure can be defined in which a RA field is included in the UUA frame and a TA field is not included in the UUA frame.

Note that in various embodiments, it may be possible that UUA information (e.g., future unavailability information and current availability information, if any) can be included in any or all of a standalone frame, a part of a frame header (e.g., contained in the A-control), or in another container.

Thus, techniques are described herein for a device to transmit an unsolicited unavailability announcement frame to share its availability/unavailability information due to events such as, but not limited to, P2P or co-existence events. It may be possible to use the techniques described herein to help manage the co-existence of Wi-Fi and other technologies.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a first wireless device:
establishing a first wireless connection using a first set of radio resources;
establishing a second wireless connection using the first set of radio resources; and
transmitting an unsolicited unavailability announcement (UUA) frame comprising information indicating a first time period of future unavailability for the first wireless device on the first set of radio resources.

2. The method of claim 1,
wherein the UUA frame includes current availability information indicating a time period of current availability for the first wireless device on the first set of radio resources.

3. The method of claim 2,
wherein the information indicating the first time period of future unavailability for the first wireless device on the first set of radio resources indicates a first future unavailability start time and a first future unavailability duration,
wherein the first future unavailability start time is indicated as a time offset relative to an end of the time period of current availability for the first wireless device.

4. The method of any of claims 1-3,
wherein the information indicating the first time period of future unavailability for the first wireless device on the first set of radio resources indicates a first future unavailability start time and a first future unavailability duration,
wherein the first future unavailability start time is indicated as a timing synchronization function (TSF) value.

5. The method of any of the preceding claims,
wherein the UUA frame further includes information indicating a second time period of future unavailability for the first wireless device on a second set of radio resources.

6. The method of any of the preceding claims,
wherein the UUA frame includes recipient address information indicating one or more wireless devices to which the first wireless device is unavailable during the first time period of future unavailability.

7. The method of claim 6,
wherein the recipient address information includes a broadcast media access control (MAC) address, wherein indicating the broadcast MAC address as the recipient address indicates that the first wireless device is unavailable to all wireless devices that receive the UUA frame on the first set of radio resources during the first time period of future unavailability.

8. The method of claim 6,
wherein the recipient address information includes a unicast media access control (MAC) address of the first wireless device, wherein indicating the unicast MAC address of the first wireless device as the recipient address indicates that the first wireless device is unavailable to all wireless devices that receive the UUA frame on the first set of radio resources during the first time period of future unavailability.

9. The method of claim 6,
wherein the recipient address information includes a unicast media access control (MAC) address of a second wireless device, wherein indicating the unicast MAC address of the second wireless device as the recipient address indicates that the first wireless device is unavailable to the second wireless device on the first set of radio resources during first time period of future unavailability.

10. A computer program comprising instructions for performing any of the methods of claims 1-9.

11. A first wireless device, comprising:
one or more antennas;
a radio operably coupled to the one or more antennas; and
a processor operably coupled to the radio;
wherein the first wireless device is configured to:
establish a wireless connection with a second wireless device on a first set of radio resources; and
receive an unsolicited unavailability announcement (UUA) frame comprising information indicating a first time period of future unavailability for the second wireless device on the first set of radio resources.

12. The first wireless device of claim 11,
wherein the UUA frame includes current availability information indicating a time period of current availability for the second wireless device on the first set of radio resources.

13. The first wireless device of any of claims 11-12,
wherein the information indicating the first time period of future unavailability for the second wireless device on the first set of radio resources indicates a first future unavailability start time and a first future unavailability duration.

14. The first wireless device of any of claims 11-13,
wherein the UUA frame further includes information indicating a second time period of future unavailability for the second wireless device on a second set of radio resources.

15. The first wireless device of any of claims 11-14,
wherein the UUA frame includes recipient address information indicating one or more wireless devices to which the second wireless device is unavailable during the first time period of future unavailability for the second wireless device on the first set of radio resources, wherein the recipient address information includes one of:
a broadcast media access control (MAC) address;
a unicast MAC address of the first wireless device; or
a unicast MAC address of the second wireless device,
wherein the first wireless device is further configured to determine that the first time period of future unavailability for the second wireless device on the first set of radio resources applies to the first wireless device based at least in part on the recipient address information.
